# EUROPÄISCHE PATENTANMELDUNG

(11) **EP 2 095 847 A1**
(43) Veröffentlichungstag der Anmeldung: **02.09.2009**
(21) Anmeldenummer: 09000147.0
(22) Anmeldetag: 08.01.2009
(51) Int. Cl.: A62B 35/04, E04G 21/32, F16F 7/12

(54) **Falldämpfer**

(30) Priorität: 26.02.2008 DE 202008002704 U
(71) Anmelder: SKYLOTEC GmbH, 56567 Neuwied (DE)
(72) Erfinder: Osterberg, Martin, 56567 Neuwied (DE); Rinklake, Kai, 56567 Neuwied (DE)
(74) Vertreter: Zeitler, Giselher

(57) **Zusammenfassung**

Bei einem Falldämpfer für eine Absturzsicherung, insbesondere einer Person, mit einem zylindrischen Gehäuse (10), einem in dem Gehäuse (10) in axialer Richtung bewegbaren Kolben (12) und einer an dem Kolben (12) befestigten und an einem ersten Ende (16) aus dem zylindrischen Gehäuse (10) herausgeführten Kolbenstange (14), wobei an einem von dem Kolben (12) in axialer Richtung abgewandten Ende der Kolbenstange (14) eine erste Befestigungsvorrichtung (18) zum Befestigen an der Absturzsicherung und an einem von dem ersten Ende (16) in axialer Richtung abgewandten zweiten Ende (20) des zylindrischen Gehäuses (10) eine zweite Befestigungsvorrichtung (22) zum Befestigen an der Absturzsicherung ausgebildet ist, wobei das zylindrische Gehäuse (10) an dem ersten Ende (16) eine Öffnung aufweist, durch die die Kolbenstange (14) hindurch greift und deren Durchmesser kleiner als der Durchmesser des Kolbens (12) ist, wobei zwischen dem Kolben (12) und dem ersten Ende (16) des zylindrischen Gehäuses (10) ein Dämpfungselement angeordnet ist, ist die Anordnung derart getroffen, dass das Dämpfungselement in Form eines dreidimensionalen Körpers (26) mit wenigstens einem Hohlraum und einem in axialer Richtung verlaufenden Kanal (30), durch den die Kolbenstange (14) greift, derart ausgebildet ist, dass sich der dreidimensionale Körper (26) durch Kollabieren des wenigstens einen Hohlraumes plastisch und Energie absorbierend verformt, wenn aufgrund eines in die Absturzsicherung eingeleiteten Fallstoßes auf die erste und zweite Befestigungsvorrichtung (18, 22) Kräfte in axial entgegengesetzter Richtung wirken.

## Beschreibung

Die vorliegende Erfindung betrifft einen Falldämpfer für eine Absturzsicherung, insbesondere einer Person, mit einem zylindrischen Gehäuse, einem in dem Gehäuse in axialer Richtung bewegbaren Kolben und einer an dem Kolben befestigten und an einem ersten Ende aus dem zylindrischen Gehäuse herausgeführten Kolbenstange, wobei an einem von dem Kolben in axialer Richtung abgewandten Ende der Kolbenstange eine erste Befestigungsvorrichtung zum Befestigen an der Absturzsicherung und an einem von dem ersten Ende in axialer Richtung abgewandten zweiten Ende des zylindrischen Gehäuses eine zweite Befestigungsvorrichtung zum Befestigen an der Absturzsicherung ausgebildet ist, wobei das zylindrische Gehäuse an dem ersten Ende eine Öffnung aufweist, durch die die Kolbenstange hindurch greift und deren Durchmesser kleiner als der Durchmesser des Kolbens ist, wobei zwischen dem Kolben und dem ersten Ende des zylindrischen Gehäuses ein Dämpfungselement angeordnet ist, gemäß dem Oberbegriff des Anspruchs 1.

Eine Absturzsicherung bzw. Anschlageinrichtung, wie beispielsweise aus der DE 299 05 756 U1 bekannt, dient zum Sichern von Personen an solchen Arbeitstellen, an denen die Gefahr besteht, dass die Person durch einen Fall aus großer Höhe verletzt werden kann, wie beispielsweise auf einem Dach eines Gebäudes. In der Ausführungsform einer permanenten Anschlageinrichtung weist die Absturzsicherung ein Sicherungselement, beispielsweise in Form eines Sicherungsseiles oder einer Sicherungsschiene, auf, welches mit geeigneten Befestigungsmitteln fest verankert ist. An diesem Sicherungselement ist ein Gleiter vorgesehen, der entlang des Sicherungselementes gleiten kann. Die zu sichernde Person wird beispielsweise über ein Mannseil mit dem Gleiter verbunden. Durch die gleitende Verschiebbarkeit des Gleiters entlang des Sicherungselementes hat die zu sichernde Person eine entsprechende Bewegungsfreiheit und kann ohne wesentliche Behinderung durch die Anschlageinrichtung arbeiten ausführen und ist trotzdem gegen ein Abstürzen vom Dach gesichert. In einer mobilen Ausführungsform weist die Absturzsicherung lediglich das Sicherungsseil auf, welches an einem Ende mit geeigneten Mitteln an einem Fixpunkt befestigt wird und an einem anderen Ende mit der zu sichernden Person verbunden ist.

Zum Abmildern bzw. Dämpfen eines Fallstoßes im Falle eines Absturzes der gesicherten Person ist es bekannt, in die Absturzsicherung, das Sicherungsseil und/oder das Mannseil einen Falldämpfer zu integrieren.

Bekannte Falldämpfer verwenden für die Aufnahme der entstehenden Stosskräfte bei einem Sturz unterschiedliche Lösungen. So ist beispielsweise aus der EP 1 693 533 A1 eine Absturzsicherung mit Falldämpfer bekannt, die in Abständen voneinander angeordnete Anker vorgesehen sind, an denen ein Sicherungsseil befestigt ist. Die Anker sind aus einem verformbaren Werkstoff ausgebildet, so dass eine Verformung der Anker Energie des Sturzes auffängt.

Aus der GB 2 357 563 A ist ein Falldämpfer für eine Absturzsicherung bekannt, welcher einen plastisch verformbaren Werkstoff aufweist, der in einem aufgerollten Zustand in einem Gehäuse angeordnet ist. Zur Dämpfung eines Falls wird dieser Werkstoff unter plastischer Verformung abgerollt. Dieses System hat jedoch den Nachteil, dass nach dem Auffangen eines Sturzes, das Gewicht der aufgefangen Person und ggf. eines sich ebenfalls an der Absturzsicherung sichernden Retters auf dem verformten Werkstoff lastet, dessen Tragfähigkeit aufgrund der plastischen Verformung mit entsprechenden Gefügeänderungen ggf. eingeschränkt ist.

Aus der gattungsgemäßen DE 60 2004 004 188 T2 ist eine Rettungsleine mit einem Falldämpfer bekannt. Der Falldämpfer umfasst einen zylindrischen, rohrförmigen Körper, einen in axialer Richtung des Körpers verschiebbaren Schaft und eine an einem Ende des Schaftes angeordnete Scheibe. Beispielsweise ist rohrförmige Körper ist an einem Fixpunkt und der Schaft mit der Rettungsleine verbunden. In dem Körper ist eine Spiralfeder angeordnet, welche zwischen der Scheibe und einem Boden des Körpers derart angeordnet ist, dass bei einem auf die Rettungsleine wirkendem Stoss, diese Feder elastisch komprimiert wird und so eine Falldämpfung zur Verfügung steht. Zusätzlich ist in dem rohrförmigen Körper ein mit dem Schaft zusammenwirkender, lösbarer Rastmechanismus angeordnet, welcher nach einer Kompression der Feder aufgrund eines Sturzes eine Rückbewegung des Schaftes aufgrund der Rückstellkraft der Feder unterbindet. Dies soll ein Zurückfedern nach einem Sturz verhindern. Nachteilig ist hier jedoch, dass nach dem lösen des Rastmechanismus an dem Falldämpfer nicht erkannt werden kann, dass dieser bereits einen Fallstoß aufgefangen hat und deshalb ggf. ausgetauscht werden müsste, da möglicherweise die Feder einem zweiten Fallstoß nicht mehr stand hält und ggf. bricht, wodurch die Funktion der Falldämpfung nicht mehr gegeben wäre. Dies würde für die fallende Person ein erhebliches Verletzungsrisiko bedeuten. Weiterhin ergibt sich bei einer Feder als Dämpfungselement bei der elastischen Deformierung der Feder ein ungleichmäßiger Kraftverlauf, da am Anfang des Federweges eine noch geringe dämpfende Kraft auftritt, die mit zunehmendem Federweg immer größer wird.

Der Erfindung liegt die Aufgabe zugrunde, einen Falldämpfer der o.g. Art dahingehend zu verbessert, dass bei kostengünstiger Herstellung und Montage eine hohe Sicherheit erzielt wird und gleichzeitig ein einmal für einen Sturz verwendeter Falldämpfer nicht mehr verwendet werden kann.

Diese Aufgabe wird erfindungsgemäß durch einen Falldämpfer der o.g. Art mit den in Anspruch 1 gekennzeichneten Merkmalen gelöst. Vorteilhafte Ausgestaltungen der Erfindung sind in den weiteren Ansprüchen beschrieben.

Bei einem Falldämpfer der o.g. Art ist es erfindungsgemäß vorgesehen, dass das Dämpfungselement in Form eines dreidimensionalen Körpers mit wenigstens einem Hohlraum und einem in axialer Richtung verlaufenden Kanal, durch den die Kolbenstange greift, derart ausgebildet ist, dass sich der dreidimensionale Körper durch Kollabieren des wenigstens einen Hohlraumes plastisch und Energie absorbierend verformt, wenn aufgrund eines in die Absturzsicherung eingeleiteten Fallstoßes auf die erste und zweite Befestigungsvorrichtung Kräfte in axial entgegengesetzter Richtung wirken.

Dies hat den Vorteil, dass man an dem Falldämpfer aufgrund der relativen Stellung von Zylinder und Kolbenstange sofort erkennen kann, ob dieser bereits einen Fallstoß aufgefangen hat und ersetzt werden muss. Weiterhin ergibt sich eine besonders schonende, weiche bzw. verletzungsminderende Falldämpfung. Zusätzlich lastet nach einem Sturz einer gesicherten Person eine statische Last aufgrund des Gewichtes der verunfallten Person und ggf. ein zusätzliches Gewicht eines Retters nicht mehr auf dem dämpfenden Element, sondern auf der Kolbenstange und dem Zylinder, so dass auch nach dem Auffangen eines Sturzes eine hohe Haltekraft bzw. Tragkraft des Falldämpfers unabhängig von dem Zustand des dämpfenden Elementes sichergestellt ist. Mit dem dreidimensionalen Körper wird im Vergleich zu herkömmlichen Dämpfungselementen ein höherer Energieabbau bei geringerem Volumen erzielt, so dass sich eine kompaktere, kleinere und leichtere Bauform des Falldämpfers ergibt. Unerwünschte Rückschwingungen nach dem Auffangen eines Sturzes durch den Falldämpfer sind sicher vermieden, so dass die Gefahr des Aushängens eines Höhensicherungsgerätes unterbunden ist.

Eine besonders gute Energieabsorption bei der plastischen Verformung des Körpers erzielt man dadurch, dass der dreidimensionale Körper aus einem offenporigen oder geschlossenporigen Werkstoff ausgebildet ist.

In einer bevorzugten Ausführungsform weist die Absturzsicherung wenigstens eine Verankerungsvorrichtung zur Befestigung der Absturzsicherung an einem Fixpunkt und ein Sicherungsseil auf, wobei die erste Befestigungsvorrichtung zur Verbindung mit dem Sicherungsseil und/oder der Verankerungsvorrichtung und die zweite Befestigungsvorrichtung zur Verbindung mit der Verankerungsvorrichtung und/oder dem Sicherungsseil ausgebildet ist.

Beispielsweise ist der dreidimensionale Körper mit Hohlräumen ausgebildet, die in einer Schnittebene senkrecht zur Längsachse des zylindrischen Gehäuses eine Wabenstruktur ausbilden. Dies erzielt einen über die Zeit und Verformungsweg des Dämpfungsweges einen gleichmäßigen Kraftverlauf.

Eine besonders einfache und kostengünstige Herstellung des dreidimensionalen Körpers erzielt man dadurch, dass der dreidimensionale Körper einteilig, zweiteilig oder mehrteilig ausgebildet ist, wobei eine Trennebene zwischen den Teilen des dreidimensionalen Körpers rechtwinklig zu einer Längsachse des zylindrischen Gehäuses ausgerichtet ist.

Eine Fixierung der einzelnen Teile des dreidimensionalen Körpers erzielt man dadurch, dass an wenigstens einer Trennebene zwischen zwei Teilen des dreidimensionalen Körpers eine ringförmige Trennscheibe angeordnet ist, welche eine Öffnung aufweist, durch die die Kolbenstange greift, und welche relativ zur Kolbenstange in axialer Richtung frei beweglich ist. Zusätzlich erzielt dies im Falle der plastischen Deformierung des Dämpfungselementes einen Abbau von Energie an zwei oder mehr Stellen gleichzeitig innerhalb des dreidimensionalen Körpers.

Zweckmäßigerweise ist der wenigstens eine Hohlraum achsensymmetrisch zu einer Längsachse des Hohlraumes ausgebildet, wobei die Längsachse wenigstens eines Hohlraumes parallel zu einer Längsachse des zylindrischen Gehäuses verläuft.

Beispielsweise ist der dreidimensionale Körper als Aluminiumkörper, insbesondere als Aluminiumwabenkörper ausgebildet. Aluminium altert nicht und der Dämpfungskörper hat bei jedem Wetter identische Eigenschaften.

Die Erfindung wird im Folgenden anhand der Zeichnung näher erläutert. Diese zeigt in:
- Fig. 1: eine bevorzugte Ausführungsform eines erfindungsgemäßen Falldämpfers in perspektivischer, teilweise aufgebrochener Ansicht,
- Fig. 2: den Falldämpfer gemäß Fig. 1 in Seitenansicht,
- Fig. 3: den Falldämpfer gemäß Fig. 1 in einer Schnittansicht entlang Linie A-A von Fig. 2,
- Fig. 4: den Falldämpfer gemäß Fig. 1 in perspektivischer, teilweise aufgebrochener Ansicht nach dem Abfangen eines Fallstoßes und
- Fig. 5: ein Dämpfungselement in Form eines Wabenkörpers in perspektivischer Ansicht.

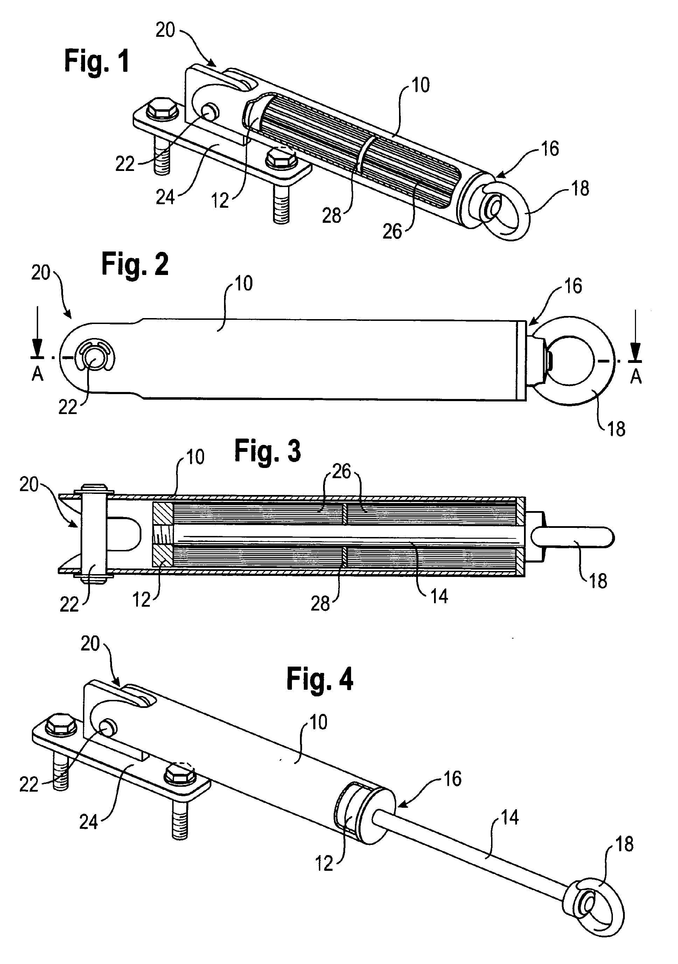

Die in Fig. 1 bis 4 dargestellte, bevorzugte Ausführungsform eines erfindungsgemäßen Falldämpfers umfasst ein zylindrisches Gehäuse 10, einen in dem Gehäuse 10 in axialer Richtung verschiebbaren Kolben 12 und eine an dem Kolben 12 über ein Gewinde befestigte Kolbenstange 14. Das zylindrische Gehäuse 10 weist ein erstes Ende 16 auf, an dem das Gehäuse 10 eine Öffnung aufweist, durch die die Kolbenstange 14 greift, wobei diese Öffnung kleiner als der Kolben 12 ist, so dass der Kolben 12 an dem ersten Ende 16 anschlägt. An einem vom Kolben 12 abgewandten Ende der Kolbenstange 14 ist eine erste Befestigungsvorrichtung in Form einer Augenschraube 18 zum Befestigen an einem Sicherungsseil (nicht dargestellt) einer nicht näher dargestellten Absturzsicherung vorgesehen. Diese Augenschraube 18 ist mittels eines Gewindes an der Kolbenstange 14 befestigt. An einem in axialer Richtung von dem ersten Ende 16 abgewandten zweiten Ende 20 des zylindrischen Gehäuses 10 ist eine zweite Befestigungsvorrichtung 22 mit einem Bolzen zum Befestigen an einer Verankerungsvorrichtung einer Absturzsicherung in Form eines T-Ankers 24 vorgesehen. Die Verankerungsvorrichtung 24 der Absturzsicherung dient zum festlegen der Absturzsicherung an einem Fixpunkt, wie beispielsweise ein Konstruktionsbauteil eines Bauwerkes, insbesondere einer Wand oder einem Träger.

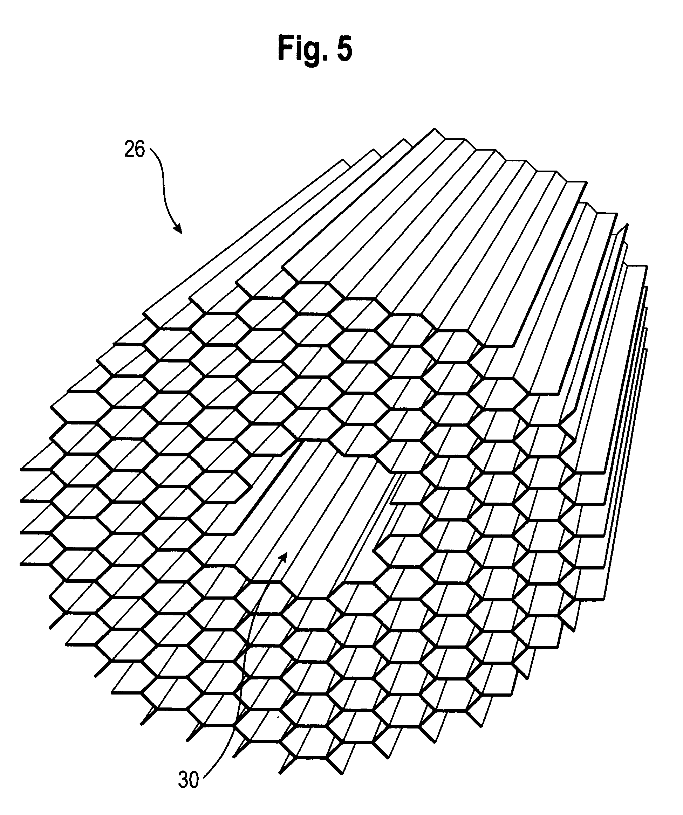

Durch Bewegen des Kolbens 14 innerhalb des zylindrischen Gehäuses 10 kann die erste Befestigungsvorrichtung 18 relativ zur zweiten Befestigungsvorrichtung 22 in axialer Richtung voneinander weg bewegt werden. Erfindungsgemäß ist in einem Raum innerhalb des zylindrischen Gehäuses 10 zwischen dem Kolben 12 und dem ersten Ende 16 des zylindrischen Gehäuses 10 ein Dämpfungselement 26 in Form eines dreidimensionalen Körpers mit Hohlräumen in Form einer Wabenstruktur angeordnet, wie in Fig. 5 dargestellt. Dieser dreidimensionale Körper 26 ist derart ausgebildet, dass dieser sich unter einer axialen Kraft in axialer Richtung plastisch unter Kolabieren der Hohlräume verformt und dadurch Energie abbaut. Hierbei ist der dreidimensionale Körper 26 derart ausgelegt, dass seine Festigkeit in axialer Richtung höher ist, als eine Spannkraft in der Absturzsicherung, mit der das Sicherungsseil gespannt ist, jedoch ist die Festigkeit in axialer Richtung niedriger als eine zwischen den Befestigungsvorrichtungen 18, 22 auftretende, diese auseinander ziehende Kraft, welche sich durch den Auffangstoß einer abstürzenden Person in dem System der Absturzsicherung ergibt. Durch das in axialer Richtung plastische Verformen des dreidimensionalen Körpers 26 wird Energie aus dem Sturz abgebaut und der Fangstoß dementsprechend gedämpft.

Fig. 4 veranschaulicht lediglich schematisch den Zustand, nach dem Auffangen und Dämpfen eines Sturzes durch den erfindungsgemäßen Falldämpfer. In diesem Zustand ist der dreidimensionale Körper 26 in axialer Richtung maximal deformiert und die weitere axiale Bewegung der Kolbenstange 14 relativ zum zylindrischen Gehäuse 10 wird durch das erste Ende 18 des zylindrischen Gehäuses 10 begrenzt. Aus Gründen der übersichtlichen Darstellung ist in Fig. 4 der verformte dreidimensionale Körper 26 nicht dargestellt. Hieraus ist unmittelbar ersichtlich, dass nach dem Sturz eine Haltekraft aufgrund des Gewichtes der verunfallten Person und ggf. des Gewichtes eines sich ebenfalls an der Absturzsicherungen befestigenden Retters nur noch über die Kolbenstange 14 an das zylindrische Gehäuse 10 übertragen wird. Das Dämpfungselement 26, d.h. der kollabierte dreidimensionale Körper selbst, muss keine Tragfähigkeit mehr zur Verfügung stellen. Dies erhöht die Sicherheit des Systems ganz erheblich, da die nach dem Sturz zur Verfügung stehende Tragkraft der Absturzsicherung nur durch die Kolbenstange 14 und das zylindrische Gehäuse 10 definiert wird und von dem Zustand des Dämpfungselementes 26 unabhängig ist. Das Gehäuse 10 und die Kolbenstange 14 nehmen beispielsweise Zugkräfte in axialer Richtung von über 50.000 kN auf.

In der beispielhaft in den Fig. 1 bis 4 dargestellten Ausführungsform des erfindungsgemäßen Falldämpfers ist das Dämpfungselement 26 zweiteilig ausgebildet. In dem zylindrischen Gehäuse 10 ist zusätzlich eine ringförmige Trennscheibe 28 vorgesehen, die eine Öffnung aufweist, durch die die Kolbenstange 14 greift. Hierbei ist die Trennscheibe 28 auf der Kolbenstange 14 in axialer Richtung frei verschiebbar angeordnet. Die Trennscheibe 28 ist zwischen den beiden Teilen des Dämpfungselementes 26 angeordnet, so dass sich diese nicht ineinander schieben können.

Wie aus Fig. 5 ersichtlich, ist das Dämpfungselement 26 als Wabenkörper (Honeycomb) mit einem mittigen, in axialer Richtung verlaufenden Kanal 30 ausgebildet, durch den die Kolbenstange 14 hindurch greift. Vorzugsweise dienen Aluminiumwaben als verformende Dämpfungselemente. Dies gewährleistet einen absolut gleichmäßigen Kraftverlauf. Die Aluminiumwabe altern nicht und haben vom Wetter bzw. von klimatischen Umgebungsparametern unabhängige Eigenschaften. Da der Einsatz von Absturzsicherungen hauptsächlich im Außenbereich vorgesehen ist, würden andere Werkstoffe, wie beispielsweise Kunststoff, im Winter härter sein als im Sommer.

In vorteilhafter Weise ist die Verschraubung zwischen der Kolbenstange 14 und dem Kolben 12 und/oder zwischen der Kolbenstange 14 und der ersten Befestigungsvorrichtung 18 zusätzlich durch Verschweißen gesichert.

## Patentansprüche

1. Falldämpfer für eine Absturzsicherung, insbesondere einer Person, mit einem zylindrischen Gehäuse (10), einem in dem Gehäuse (10) in axialer Richtung bewegbaren Kolben (12) und einer an dem Kolben (12) befestigten und an einem ersten Ende (16) aus dem zylindrischen Gehäuse (10) herausgeführten Kolbenstange (14), wobei an einem von dem Kolben (12) in axialer Richtung abgewandten Ende der Kolbenstange (14) eine erste Befestigungsvorrichtung (18) zum Befestigen an der Absturzsicherung und an einem von dem ersten Ende (16) in axialer Richtung abgewandten zweiten Ende (20) des zylindrischen Gehäuses (10) eine zweite Befestigungsvorrichtung (22) zum Befestigen an der Absturzsicherung ausgebildet ist, wobei das zylindrische Gehäuse (10) an dem ersten Ende (16) eine Öffnung aufweist, durch die die Kolbenstange (14) hindurch greift und deren Durchmesser kleiner als der Durchmesser des Kolbens (12) ist, wobei zwischen dem Kolben (12) und dem ersten Ende (16) des zylindrischen Gehäuses (10) ein Dämpfungselement angeordnet ist,
**dadurch gekennzeichnet,**
**dass** das Dämpfungselement in Form eines dreidimensionalen Körpers (26) mit wenigstens einem Hohlraum und einem in axialer Richtung verlaufenden Kanal (30), durch den die Kolbenstange (14) greift, derart ausgebildet ist, dass sich der dreidimensionale Körper (26) durch Kollabieren des wenigstens einen Hohlraumes plastisch und Energie absorbierend verformt, wenn aufgrund eines in die Absturzsicherung eingeleiteten Fallstoßes auf die erste und zweite Befestigungsvorrichtung (18, 22) Kräfte in axial entgegengesetzter Richtung wirken.

2. Falldämpfer nach Anspruch 1, **dadurch gekennzeichnet, dass** der dreidimensionale Körper (26) aus einem offenporigen oder geschlossenporigen Werkstoff ausgebildet ist.

3. Falldämpfer nach Anspruch 1 oder 2, **dadurch gekennzeichnet, dass** die Absturzsicherung wenigstens eine Verankerungsvorrichtung (24) zur Befestigung der Absturzsicherung an einem Fixpunkt und ein Sicherungsseil aufweist, wobei die erste Befestigungsvorrichtung (18) zur Verbindung mit dem Sicherungsseil und/oder der Verankerungsvorrichtung (24) und die zweite Befestigungsvorrichtung (22) zur Verbindung mit der Verankerungsvorrichtung (24) und/oder dem Sicherungsseil ausgebildet ist.

4. Falldämpfer nach wenigstens einem der vorhergehenden Ansprüche, **dadurch gekennzeichnet, dass** der dreidimensionale Körper (26) mit Hohlräumen ausgebildet ist, die in einer Schnittebene senkrecht zur Längsachse des zylindrischen Gehäuses (10) eine Wabenstruktur ausbilden.

5. Falldämpfer nach wenigstens einem der vorhergehenden Ansprüche, **dadurch gekennzeichnet, dass** der dreidimensionale Körper (26) einteilig, zweiteilig oder mehrteilig ausgebildet ist, wobei eine Trennebene zwischen den Teilen des dreidimensionalen Körpers (26) rechtwinklig zu einer Längsachse des zylindrischen Gehäuses (10) ausgerichtet ist.

6. Falldämpfer nach Anspruch 5, **dadurch gekennzeichnet, dass** an wenigstens einer Trennebene zwischen zwei Teilen des dreidimensionalen Körpers (26) eine ringförmige Trennscheibe (28) angeordnet ist, welche eine Öffnung aufweist, durch die die Kolbenstange (14) greift, und welche relativ zur Kolbenstange (14) in axialer Richtung frei beweglich ist.

7. Falldämpfer nach wenigstens einem der vorhergehenden Ansprüche, **dadurch gekennzeichnet, dass** der wenigstens eine Hohlraum achsensymmetrisch zu einer Längsachse des Hohlraumes ausgebildet ist, wobei die Längsachse wenigstens eines Hohlraumes parallel zu einer Längsachse des zylindrischen Gehäuses (10) verläuft.

8. Falldämpfer nach wenigstens einem der vorhergehenden Ansprüche, **dadurch gekennzeichnet, dass** der dreidimensionale Körper (26) als Aluminiumkörper, insbesondere als Aluminiumwabenkörper ausgebildet ist.
